# EUROPÄISCHE PATENTSCHRIFT

(11) **EP 2 706 277 B1**
(45) Veröffentlichungstag und Bekanntmachung des Hinweises auf die Patenterteilung: **12.08.2015**
(21) Anmeldenummer: 13183804.7
(22) Anmeldetag: 10.09.2013
(51) Int. Cl.: F16L 19/028, B60T 17/04

(54) **Rohrschraube zur Befestigung einer Rohrleitung und ein Verfahren zur Herstellung einer solchen Rohrschraube**
Tubular screw for fixing a pipe and a method for producing such a tubular screw
Vis de tube destinée à être fixée sur une conduite et procédé de fabrication d'une telle vis de tube

(30) Priorität: 10.09.2012 DE 102012108433
(43) Veröffentlichungstag der Anmeldung: 12.03.2014
(73) Patentinhaber: Cooper-Standard Automotive (Deutschland) GmbH, 89601 Schelklingen (DE)
(72) Erfinder: Sprenger, Lutz, 67071 Ludwigshafen (DE); Schuhmacher, Uwe, 69214 Eppelheim (DE)
(74) Vertreter: Flügel Preissner Kastel Schober

(56) Entgegenhaltungen:
- EP-B1- 2 136 119
- US-A1- 2011 204 623

## Beschreibung

Die Erfindung betrifft eine Rohrschraube zur Befestigung einer Rohrleitung. Des Weiteren betrifft die Erfindung ein Verfahren zur Herstellung einer solchen Rohrschraube.

Rohrschrauben werden zur Verbindung einer Rohrleitung mit einem Aggregat in einem Bremssystem eines Kraftfahrzeugs verwendet. Konventionelle Rohrschrauben weisen in Axialrichtung einen Durchgang zur Aufnahme der Rohrleitung und ein Außengewinde auf. Zur Fixierung des Stahlrohrs an einem Aggregat eines Bremssystems wird die Rohrleitung derart in den Durchgang eingesetzt, dass ein an der Rohrleitung endseitig angeordneter entsprechend der DIN-Norm genormter Bördel einen Schraubenbund der Rohrschraube kontaktiert. Im Anschluss daran wird die Rohrschraube samt eingesetzter Rohrleitung in eine Öffnung des Aggregats eingeschraubt.

Rohrschrauben gehen aus EP 0 997 677 A2, EP 1 624 183 A1 und US 2011/0204623 A1 hervor.

Beim Einschrauben der Rohrschraube in das Aggregat kann es aufgrund der zwischen Schraubenbund, der auch als Bundabschnitt bezeichnet werden kann, und Bördelschulter auftretenden Reibung zu einer Tordierung der Rohrleitung kommen. Eine derartige Torsion des Rohrs ist jedoch unerwünscht, da infolge der im Stahlrohr verbleibenden Torsionsspannung die

Gefahr eines Lockerns der Rohrschraube bzw. der kompletten Schraubenverbindung besteht.

Aus EP 2 136 119 B1 geht eine Rohrschraube hervor, die einen Gewindeabschnitt und eine gewindefreie Kontaktfläche aufweist, wobei der Gewindeabschnitt und die gewindefreie Kontaktfläche jeweils mit einer unterschiedlichen reibungsverminderten Beschichtung versehen sind. Nachteilig hierbei ist, dass die Beschichtung aufgrund ihrer Eigenschaften im ausgehärteten Zustand verhältnismäßig hart ist, so dass es insbesondere im Kontaktbereich der Rohrschraube zur Bördelschulter zu einem Abplatzen der Gleitbeschichtung kommen kann. Zudem ist die Herstellung einer derartigen Rohrschraube verhältnismäßig kostenintensiv, da unterschiedliche Beschichtungsmaterialien zum Einsatz kommen.

In EP 1 411 288 A1 ist eine Gewindeverbindung für Stahlrohre von Ölleitungen offenbart. Die Gewindeverbindung umfasst einen Anschluss und eine Gewindebox, die beide eine Kontaktfläche mit einem Gewindebereich und einem gewindelosen Kontaktbereich aufweisen. Der Kontaktbereich des Anschlusses oder der Gewindebox ist mit einer metallischen Grundschicht und einer darauf aufgebrachten Gleitschicht versehen, wobei die Gleitschicht aus einer festen oder flüssigen Gleitschicht gebildet sein kann.

Der Erfindung liegt daher die Aufgabe zugrunde, eine Rohrschraube der eingangs genannten Art zu schaffen, die eine verbesserte Beschichtung aufweist und gleichzeitig kostengünstig in der Herstellung ist.

Zur **Lösung** dieser Aufgabe wird eine Rohrschraube mit den Merkmalen des Anspruchs 1 und ein Verfahren zur Herstellung der erfindungsgemäßen Rohrschraube vorgeschlagen.

Bevorzugte Ausgestaltungen der erfindungsgemäßen Rohrschraube und des erfindungsgemäßen Verfahrens sind Gegenstand der abhängigen Ansprüche.

Die erfindungsgemäße Rohrschraube weist einen Gewindeabschnitt und einen Bundabschnitt auf, wobei der Gewindeabschnitt und der Bundabschnitt wenigstens abschnittsweise mit einer ersten Lage, die eine reibungsvermindernde Schicht aufweist, versehen sind, und wobei der Bundabschnitt wenigstens abschnittsweise mit einer zweiten Lage, die die reibungsvermindernde Schicht aufweist, versehen ist. Aufgrund der zweiten Schicht steht insbesondere im Kontaktbereich eine ausreichende Menge der reibungsvermindernden Schicht zur Verfügung. Somit wird eine Torsion der Rohrleitung während des Einschraubens vorteilhaft vermieden. Vorzugsweise handelt es sich bei der reibungsvermindernden Schicht um ein Gleitmittel. Die Lage kann auch als Überzug oder Beschichtung bezeichnet werden, wobei die Lage ausschließlich oder unter anderem die reibungsvermindernde Schicht umfassen kann. Die aus dem Gleitmittel gebildete Schicht ist vorteilhaft weich ausgebildet, so dass ein Abplatzen während des Einschraubvorgangs vermieden wird. Da die zweite Lage und die erste Lage aus den gleichen reibungsvermindernden Schichten gebildet sind, ist das erfindungsgemäße Befestigungselement kostengünstig in der Herstellung.

Vorzugsweise ist der Bundabschnitt teilweise oder vollständig mit der zweiten Lage, die die reibungsvermindernde Schicht aufweist, versehen.

Vorteilhafterweise ist die erste Lage im Bereich des Gewindeabschnitts derart behandelt, dass das Verhältnis des Reibwerts der ersten Lage im Bereich des Gewindeabschnitts zu der ersten und/oder zweiten Lage zwischen 1,5 und 3 beträgt. Hierdurch kann eine im Bereich des Gewindeabschnitts erforderliche Reibzahl eingestellt werden, um einen für die Verbindung von Rohrleitung mit einem Aggregat eines Bremssystems erforderlichen Einschraubparameter zu erreichen. Vorteilhafterweise wird die Reibwertanpassung im Gewindeabschnitt durch eine teilweise thermische Modifizierung der ersten Lage im Bereich des Gewindeabschnitts erzielt. Vorzugsweise beträgt der Reibwert der ersten Lage nach der thermischen Nachbehandlung zwischen 0,08 und 0,2.

In einer vorteilhaften Ausgestaltung ist die reibungsvermindernde Schicht bzw. das Gleitmittel ein auf Polyethylen basierender Trockengleitfilm. Vorzugsweise ist der auf Polyethylen basierende Trockengleitfilm mit einem synergetisch wirkenden Festschmierstoff versehen. Bevorzugt handelt es sich bei dem Festschmierstoff um eine Kombination aus Polytetrafluorethylen mit eingelagerten Sulfiden und Silikaten. Weiterhin bevorzugt umfasst die Schicht 5 % bis 20 % Polyethylen, 5 % bis 60 % Polytetrafluorethylen, 5 % bis 60 % eingelagerte Sulfide und 3 % bis 20 % Silikate. Das Gleitmittel ist wasserlöslich und bildet nach ihrer Trocknung eine dünne, graue Schicht mit einer definierbaren Reibzahl aus.

Durch eine thermische Nachbehandlung bzw. Modifizierung, insbesondere im Bereich des Gewindeabschnitts, ist es möglich, eine gewünschte Reibzahl einzustellen. Vorzugsweise beträgt der Reibwert der reibungsvermindernden Schicht auf dem Gewinde zwischen 0,08 und 0,2 und auf dem Schraubenbund zwischen 0,04 und 0,12.

Vorzugsweise ist zwischen der Oberfläche der Rohrschraube und der ersten Lage eine Korrosionsschutzschicht vorgesehen. Hierdurch wird die Lebensdauer der Rohrschraube erhöht, da die Oxidation der Rohrschraube durch die Korrosionsschutzschicht verhindert wird. Vorzugsweise besteht die Korrosionsschutzschicht aus einer Zink-Nickel-Beschichtung, deren Schichtdicke zwischen 8 µm und 15 µm beträgt. Besonders bevorzugt beträgt der Nickelgehalt in der Zink-Nickel-Beschichtung zwischen 12 % und 15 %. Vorteilhafterweise beträgt die Schichtdicke der ersten Lage zwischen 1 µm und 2 µm. Weiterhin vorzugsweise beträgt die Schichtdicke der zweiten Lage zwischen 0,5 µm und 1,5 µm. Hierdurch wird eine ausreichende Menge an reibungsvermindernder Schicht, insbesondere im Bereich der Kontaktfläche, zur Verfügung gestellt, so dass eine Torsion einer Rohrleitung während des Einschraubens der Rohrschraube vermieden wird.

Des Weiteren betrifft die Erfindung ein Verfahren zur Herstellung der erfindungsgemäßen Rohrschraube. Das Verfahren umfasst folgende Schritte. Zuerst wird eine Rohrschraube, die einen Gewindeabschnitt und einen Bundabschnitt umfasst, erzeugt. Anschließend wird wenigstens abschnittsweise eine erste Lage, die eine reibungsvermindernde Schicht aufweist, im Bereich des Gewindeabschnitts und des Bundabschnitts aufgetragen. Schließlich wird wenigstens abschnittsweise eine zweite Lage, die die reibungsvermindernde Schicht aufweist, auf die erste Lage im Bereich des Bundabschnittes aufgetragen. Das Verfahren gewährleistet die Herstellung einer Rohrschraube, die eine verringerte Reibung im Kontaktbereich von Rohrleitung und Bundabschnitt aufweist und zugleich kostengünstig in der Herstellung ist. Vorzugsweise wird als reibungsvermindernde Schicht ein Gleitmittel verwendet. Besonders bevorzugt ist die reibungsvermindernde Schicht ein auf Polyethylen basierender Trockengleitfilm. Vorzugsweise ist der auf Polyethylen basierende Trockengleitfilm mit einem synergetisch wirkenden Festschmierstoff versehen. Bevorzugt handelt es sich bei dem Festschmierstoff um eine Kombination aus Polytetrafluorethylen mit eingelagerten Sulfiden und Silikaten. Weiterhin bevorzugt umfasst die Schicht 5 % bis 20 % Polyethylen, 5 % bis 60 % Polytetrafluorethylen, 5 % bis 60 % eingelagerte Sulfide und 3 % bis 20 % Silikate. Das Gleitmittel ist wasserlöslich und bildet nach dessen Trocknung eine dünne, graue Schicht mit einer definierbaren Reibzahl aus. Somit ist es durch eine thermische Nachbehandlung, insbesondere im Bereich des Gewindeabschnitts, möglich, eine gewünschte Reibzahl von 0,08 bis 0,2 einzustellen. Vorzugsweise beträgt der Reibwert der reibungsvermindernden Schicht am Schraubenbund zwischen 0,04 und 0,12.

Vorzugsweise wird die Rohrschraube mittels eines spanenden und/oder spanlosen Verfahrens hergestellt. Weiterhin bevorzugt wird die Rohrschraube nach deren Herstellung oberflächenvergütet. Die Oberflächenvergütung erfolgt bevorzugt mittels eines Temperprozesses, wobei die Rohrschraube über eine Zeit von ca. sechs Stunden bei ca. 200 bis 230 ° C wärmebehandelt wird. Vorzugsweise wird die Rohrschraube nach dem Tempern in einem alkalischen Ultraschallbad gereinigt.

In einer bevorzugten Ausgestaltung wird die Oberfläche der Rohrschraube aufgeraut, wobei die Oberflächenrauhigkeit Ra zwischen 1,0 µm und 1,5 µm beträgt. Hierbei wird in einem Arbeitsgang die gesamte Rohrschraube mit einem Strahlgut behandelt. Die Anrauung der Oberfläche verbessert die Haftung der nachfolgend aufgebrachten Schicht auf der Rohrschraube.

Auf die aufgeraute Oberfläche wird vorzugsweise eine Korrosionsschutzschicht aufgebracht, die mittels eines Niederdruck-Plasmaverfahrens chemisch aktiviert wird. Vorzugsweise wird die Korrosionsschutzschicht mithilfe einer elektrolytischen Verzinkung auf die aufgeraute Oberfläche der Rohrschraube aufgebracht. Weiterhin bevorzugt besteht die Korrosionsschutzschicht aus einer Zink-Nickel-Beschichtung, deren Schichtdicke zwischen 8 µm und 15 µm beträgt. Besonders bevorzugt beträgt der Nickelgehalt in der Zink-Nickel-Beschichtung zwischen 12 % und 15 %. Die chemische Aktivierung der Korrosionsschutzschicht erfolgt vorteilhaft nach dem Auftragen der Korrosionsschutzschicht, indem ein Plasmastrahl zur Aktivierung der Schicht, insbesondere im Bereich des Gewindeabschnitts und im Bereich des Bundabschnitts, positioniert wird. Vorteilhaft wird die Plasmabehandlung in einer reinen Sauerstoffunterdruckatmosphäre durchgeführt. Vorteilhaft erfolgt das Auftragen der Korrosionsschutzschicht vor dem Auftragen der ersten Lage.

Vorzugsweise wird die erste Lage mittels eines Tauchverfahrens oder Trommelverfahrens aufgebracht. Beim Tauchverfahren wird die Rohrschraube bevorzugt an seinem Kopfabschnitt aufgehängt und vollständig in ein Bad, das mit dem Gleitmittel gefüllt ist, getaucht. Beim Trommelverfahren wird die Rohrschraube in einer Trommel durch Rotation mit dem Gleitmittel beschichtet.

In einer vorteilhaften Ausgestaltung wird nach dem Auftragen der ersten Lage die Rohrschraube erhitzt. Das Erhitzen erfolgt in einem Umluftofen bei einer Temperatur zwischen 50 °C und 250 °C. Hierdurch wird die erste Lage der reibungsvermindernden Schicht einerseits getrocknet und andererseits vernetzt. Der Trockenvorgang der ersten Lage kann auch vollständig oder teilweise während des Transports zum Umluftofen erfolgen

Weiterhin bevorzugt wird die erste Lage im Bereich des Gewindeabschnitts thermisch nachbehandelt bzw. modifiziert. Dadurch wird eine teilweise thermische Zerstörung der reibungsvermindernden Schicht im Bereich des Gewindeabschnitts erzielt, so dass der Reibwert im Gewindeabschnitt erhöht wird. Hierdurch wird eine zum Einschrauben in ein Aggregat eines Bremssystems geforderte Mindestreibzahl eingestellt. Vorzugsweise beträgt der Reibwert für das Gewinde nach der thermischen Nachbehandlung zwischen 0,08 und 0,2. Die thermische Nachbehandlung kann während des Erhitzens im Umluftofen erfolgen. Ferner kann die thermische Nachbehandlung auch außerhalb des Umluftofens mittels Induktion erfolgen.

Vorteilhafterweise wird die zweite Lage mittels eines Tampondruckverfahrens aufgebracht. Hierbei handelt es sich um ein indirektes Tiefdruckverfahren, bei dem ein mit dem Gleitmittel getränkter elastischer Tampon auf den Bundabschnitt gedrückt wird. Hierbei wird vorzugsweise nur ein Teil des Bundabschnitts mit der zweiten Lage bzw. dem Gleitmittel versehen. Weiterhin bevorzugt wird die zweite Lage bzw. das Gleitmittel auf den gesamten Bundabschnitt mittels des Tampondruckverfahrens aufgetragen.

Bevorzugt wird nach dem Auftragen der zweiten Lage die Rohrschraube luftgetrocknet.

Nachfolgend wird die Erfindung anhand der Zeichnungen näher erläutert. Hierbei zeigen schematisch:
- Fig. 1: einen Querschnitt durch eine erfindungsgemäße Rohrschraube; und
- Fig. 2: einen Querschnitt durch die erfindungsgemäße Rohrschraube mit einer Rohrleitung.

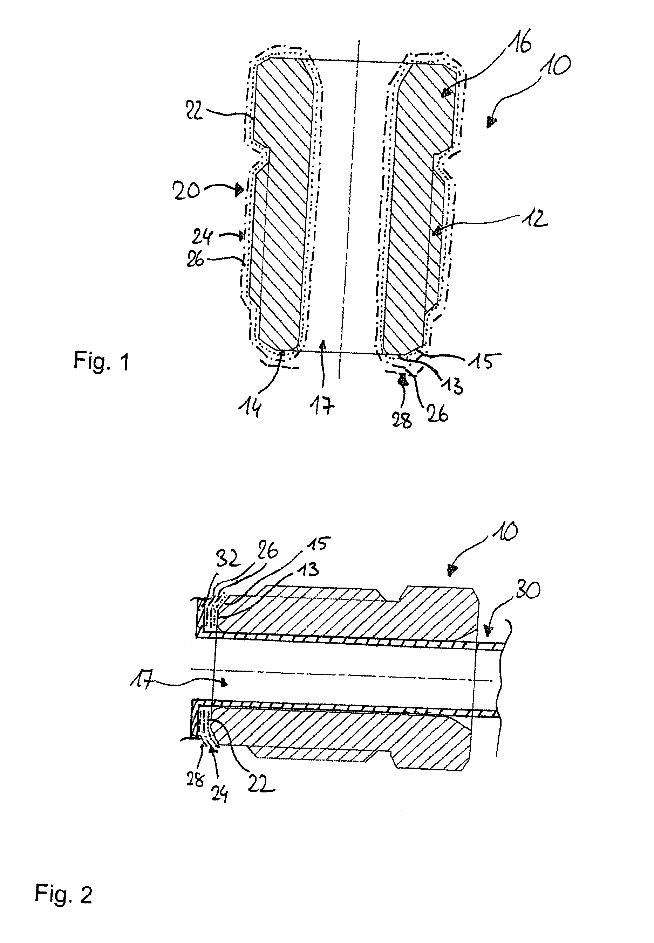

In Fig. 1 ist eine erfindungsgemäße Rohrschraube 10, das zur Befestigung einer Rohrleitung 30 an einem nicht dargestellten Aggregat eines Bremssystems dient, dargestellt.

Die Rohrschraube 10 weist einen Gewindeabschnitt 12, einen Bundabschnitt 14, einen Kopfabschnitt 16 und einen in Axialrichtung erstreckenden Durchgang 17 auf. Der Kopfabschnitt 16 ist im vorliegenden Ausführungsbeispiel als Sechskant ausgebildet, kann jedoch auch andersartig ausgebildet sein. Der Bundabschnitt 14 ist an einem dem Kopfabschnitt 16 gegenüberliegenden Stirnende der Rohrschraube 10 angeordnet und weist einen geraden Abschnitt 13 und einen konischen Abschnitt 15 auf. Der Gewindeabschnitt 12 ist als Außengewinde ausgebildet.

Wie in Fig. 1 dargestellt ist, ist die Oberfläche der Rohrschraube 10 mit einer Beschichtung 20, die schematisch und vergrößert dargestellt ist, versehen. Die Beschichtung 20 umfasst eine Korrosionsschutzschicht 22, eine erste Lage 24, die eine reibungsvermindende Schicht 26 aufweist, und eine zweite Lage 28, die die reibungsvermindende Schicht 26 aufweist. In Fig. 1 ist die Korrosionsschutzschicht 22 gepunktet, die erste Lage 24 strichpunktiert und die zweite Lage 28 gestrichelt dargestellt. Die Korrosionsschutzschicht 22 ist auf die gesamte Oberfläche der Rohrschraube 10 aufgebracht und mit dieser stoffschlüssig verbunden. Auf die Korrosionsschutzschicht 22 ist die erste Lage 24 aufgebracht und mit dieser stoffschlüssig verbunden. Die zweite Lage 28 ist auf die erste Lage 24 im Bereich des Bundabschnitts 14 aufgebracht und mit der ersten Lage 24 stoffschlüssig verbunden. Im vorliegenden Ausführungsbeispiel ist die zweite Lage 28 vollständig auf den geraden Abschnitt 13 und teilweise auf den konischen Abschnitt 15 aufgetragen. Darüber hinaus wäre es auch denkbar, lediglich den geraden Abschnitt 13 mit der zweiten Lage 28 zu versehen. Ferner ist es auch denkbar, die zweite Lage 28 vollständig auf den geraden Abschnitt 13 und den konischen Abschnitt 15 aufzutragen. Die reibungsvermindende Schicht 26 ist ein Gleitmittel, das einen auf Polyethylen basierenden Trockengleitfilm mit einem synergetisch wirkenden Festschmierstoff aufweist. Bei dem Festschmierstoff kann es sich um eine Kombination aus Polytetrafluorethylen mit eingelagerten Sulfiden und Silikaten handeln. Die Schicht 26 kann aus 5 % bis 20 % Polyethylen, 5 % bis 60 % Polytetrafluorethylen, 5 % bis 60 % eingelagerte Sulfide und 3 % bis 20 % Silikate bestehen.

Zur Herstellung der erfindungsgemäßen Rohrschraube 10 wird diese zunächst spanend oder spanlos erzeugt. Im Anschluss daran kann die Oberfläche der Rohrschraube 10 mittels eines Temperprozesses vergütet werden, indem die Rohrschraube 10 über eine Zeit von ca. sechs Stunden bei ca. 200 bis 230 ° C wärmebehandelt wird. Im Falle einer Oberflächenvergütung wird die Rohrschraube 10 in einem alkalischen Ultraschallbad gereinigt. Im Anschluss daran erfolgt eine mechanische Behandlung der Oberfläche der Rohrschraube 10, indem diese mit einem Strahlgut behandelt wird. Hierdurch wird eine Oberflächenrauhigkeit Ra von zwischen 1 µm und 1,5 µm erzeugt. Anschließend erfolgt die Aufbringung der Korrosionsschutzschicht 22 mittels einer elektronischen Verzinkung. Die Korrosionsschutzschicht 22 besteht aus einer Zink-Nickel-Beschichtung, wobei die Schichtstärke zwischen 8 µm und 15 µm und der Nickelgehalt in der Zink-Nickel-Beschichtung zwischen 12 % und 15 % betragen kann. Nach der elektrolytischen Verzinkung wird die Oberfläche der Rohrschraube 10 in einem Niederdruck-Plasmaverfahren chemisch aktiviert, indem ein Plasmastrahl auf den Gewindeabschnitt 12 und den Bundabschnitt 14 gerichtet wird. Die Plasmabehandlung wird in einer reinen Sauerstoffunterdruckatmosphäre durchgeführt. Im Anschluss daran erfolgt die Aufbringung der ersten und zweiten Lage 24, 28, die die reibungsvermindende Schicht 26 aufweisen. Zunächst wird die erste Lage 24 auf die komplette Oberfläche der Rohrschraube 10 aufgetragen. Dies kann beispielsweise im Tauchverfahren erfolgen. Hierzu wird die Rohrschraube 10 an ihrem Kopfabschnitt 16 aufgehängt und vollständig in ein Gleitmittelschichtbad eingetaucht. Alternativ kann die Rohrschraube 10 im Trommelverfahren mit der ersten Lage 24 versehen werden. Hierzu wird die Rohrschraube 10 in einer Trommel rotiert und dabei mit der ersten Lage 24 versehen. Im Anschluss daran wird die Rohrschraube 10 zum Trocken und Vernetzen der ersten Lage 24 vollständig in einem Umluftofen bei einer Temperatur von 50° C bis 250° C erhitzt. Ferner kann ein Trocken der ersten Lage 24 auch schon während des Transports zum Umluftofen vollständig oder teilweise erfolgen. Durch das Erhitzen erfolgt zudem eine teilweise thermische Zerstörung der ersten Lage 24. Dadurch wird der Reibwert im Gewindeabschnitt 12 erhöht, so dass dieser an die erforderlichen Einschraubparameter zum Einschrauben in ein Aggregat eines Bremssystems angepasst wird. Der Reibwert im Gewindeabschnitt 12 nach der thermischen Nachbehandlung kann zwischen 0,08 und 0,2 betragen. Alternativ kann die thermische Nachbehandlung der ersten Lage 24 im Bereich des Gewindeabschnitts 12 außerhalb des Umluftofens mittels Induktion erfolgen. Nachfolgend wird die zweite Lage 28 am Bundabschnitt 14, insbesondere am geraden Abschnitt 13 und teilweise am konischen Abschnitt 15, mittels eines Tampondrucks aufgebracht. Abschließend wird die Rohrschraube 10 ohne Wärmezufuhr luftgetrocknet.

In Fig. 2 ist eine Rohrschraube 10 mit einer in dem Durchgang 17 eingesetzten Rohrleitung 30 gezeigt. Die Rohrleitung 30 weist an einem stirnseitigen Ende einen entsprechend der DIN-Norm DIN 74234 genormten Bördel, der nur teilweise dargestellt ist, auf. Darüber hinaus wären auch andere Bördelformen denkbar. Wie in Fig. 2 gezeigt ist, umfasst der Bördel eine umlaufende Bördelschulter 32, die den Bundabschnitt 14 kontaktiert. Zur Befestigung der Rohrleitung 30 in einem nicht dargestellten Aggregat eines Bremssystems mittels der Rohrschraube 10 wird zunächst die Rohrleitung 30 in den Durchgang 17 der Rohrschraube 10 derart eingesetzt, dass die Bördelschulter 32 den Bundabschnitt 14 kontaktiert. Im Anschluss daran wird die Rohrschraube 10 in eine nicht dargestellte Öffnung des Aggregats eingeschraubt. In Fig. 2 sind lediglich für eine anschaulichere Darstellung die Korrosionsschutzschicht 22 und die Lagen 24, 28 stark vergrößert sowie ein Abstand zwischen der Bördelschulter 32 und dem Bundabschnitt 14 dargestellt. Aufgrund der ersten und zweiten Lage 24, 26 auf dem Bundabschnitt 14 tritt zwischen dem Bundabschnitt 14 und der Bördelschulter 32 kaum eine Reibung auf, so dass eine Tordierung der Rohrleitung 30 während des Einschraubens vermieden wird.

Die erfindungsgemäße Rohrschraube 10 zeichnet sich durch seine beiden Lagen 24, 28, die aus der reibungsvermindenden Schicht 26 gebildet sind, im Bereich des Bundabschnitts 14 aus. Hierdurch wird während des Einschraubens der Rohrschraube 10 in einer Öffnung eines Aggregats die Reibung zwischen der Kontaktfläche von Bundabschnitt 14 und Bördelschulter 32 verringert oder gar vermieden, so dass eine Torsion der Rohrleitung 30 vermieden wird. Ferner zeichnet sich das erfindungsgemäße Verfahren durch die kostengünstige Herstellung einer derartigen Rohrschraube 10 aus.

### Bezugszeichenliste

- 10: Rohrschraube
- 12: Gewindeabschnitt
- 13: gerader Abschnitt
- 14: Bundabschnitt
- 15: konischer Abschnitt
- 16: Kopfabschnitt
- 17: Durchgang
- 20: Beschichtung
- 22: Korrosionsschutzschicht
- 24: erste Lage
- 26: reibungsvermindernde Schicht
- 28: zweite Lage
- 30: Rohrleitung
- 32: Bördelschulter

## Patentansprüche

1. Rohrschraube zur Befestigung einer Rohrleitung (30), mit einem Gewindeabschnitt (12) und einem Bundabschnitt (14), **dadurch gekennzeichnet, dass** der Gewindeabschnitt (12) und der Bundabschnitt (14) wenigstens abschnittsweise mit einer ersten Lage (24), die eine reibungsvermindernde Schicht (26) aufweist, versehen sind, und dass der Bundabschnitt (14) wenigstens abschnittsweise mit einer zweiten Lage (28), die die reibungsvermindernde Schicht (26) aufweist, versehen ist.

2. Rohrschraube nach Anspruch 1, **dadurch gekennzeichnet, dass** die erste Lage (24) im Bereich des Gewindeabschnitts (12) derart behandelt ist, dass das Verhältnis des Reibwerts der ersten Lage (24) im Gewindeabschnitt (12) im Verhältnis zu der ersten und/oder zweiten Lage (24, 28) im Bundabschnitt (14) zwischen 1,5 und 3 beträgt.

3. Rohrschraube nach Anspruch 1 oder 2, **dadurch gekennzeichnet, dass** die reibungsvermindernde Schicht (26) ein auf Polyethylen basierender Trockengleitfilm ist.

4. Rohrschraube nach einem der vorhergehenden Ansprüche, **dadurch gekennzeichnet, dass** zwischen der Oberfläche der Rohrschraube (10) und der ersten Lage (24) eine Korrosionsschutzschicht (22) vorgesehen ist.

5. Rohrschraube nach einem der vorhergehenden Ansprüche, **dadurch gekennzeichnet, dass** die Schichtdicke der ersten Lage (24) zwischen 1 µm und 2 µm beträgt.

6. Rohrschraube nach einem der vorhergehenden Ansprüche, **dadurch gekennzeichnet, dass** die Schichtdicke der zweiten Lage (28) zwischen 0,5 µm und 1,5 µm beträgt.

7. Verfahren zur Herstellung einer Rohrschraube (10) nach einem der Ansprüche 1 bis 6, das folgende Verfahrensschritte umfasst:
a. Erzeugen einer Rohrschraube (10), das einen Gewindeabschnitt (12) und einen Bundabschnitt (14) umfasst;
b. Wenigstens abschnittsweises Auftragen einer ersten Lage (24), die eine reibungsvermindernde Schicht (26) aufweist, im Bereich des Gewindeabschnitts (12) und des Bundabschnitts (14); und
c. Wenigstens abschnittsweises Auftragen einer zweiten Lage (28), die die reibungsvermindernde Schicht (26) aufweist, im Bereich des Bundabschnittes (14).

8. Verfahren nach Anspruch 7, **dadurch gekennzeichnet, dass** die Oberfläche der Rohrschraube (10) aufgeraut wird, wobei die Oberflächenrauhigkeit Ra zwischen 1,0 µm und 1,5 µm beträgt.

9. Verfahren nach Anspruch 8, **dadurch gekennzeichnet, dass** auf die aufgeraute Oberfläche eine Korrosionsschtzschicht (22) aufgebracht wird, die mittels eines Niederdruck-Plasmaverfahrens chemisch aktiviert wird.

10. Verfahren nach einem der Ansprüche 7 bis 9, **dadurch gekennzeichnet, dass** die erste Lage (24) mittels eines Tauchverfahrens oder Trommelverfahrens aufgebracht wird.

11. Verfahren nach Anspruch 10, **dadurch gekennzeichnet, dass** nach dem Aufbringen der ersten Lage (24) die Rohrschraube (10) erhitzt wird.

12. Verfahren nach Anspruch 11, **dadurch gekennzeichnet, dass** die erste Lage (24) im Bereich des Gewindeabschnitts (12) thermisch nachbehandelt wird.

13. Verfahren nach einem der Ansprüche 7 bis 12, **dadurch gekennzeichnet, dass** die zweite Lage (28) mittels eines Tampondruckverfahrens aufgebracht wird.

14. Verfahren nach Anspruch 13, **dadurch gekennzeichnet, dass** nach dem Auftragen der zweiten Lage (28) die Rohrschraube (10) luftgetrocknet wird.

## Claims

1. Pipe screw for fastening of a pipeline (30), having a threaded portion (12) and a collar portion (14), **characterised in that** the threaded portion (12) and the collar portion (14) being provided at least sectionwise with a first layer (24), having a friction reducing coating (26), and **in that** the collar portion (14) being provided at least sectionwise with a second layer (28), having the friction reducing coating (26).

2. Pipe screw according to claim 1, **characterised in that** the first layer (24) is treated in the area of the threaded portion (12) such that the ratio of the friction coefficient of the first layer (24) in the threaded portion (12) to the friction coefficient of the first and / or second layer (24, 28) in the collar portion (14) is between 1.5 and 3.

3. Pipe screw according to claims 1 or 2, **characterised in that** the friction reducing coating (26) is a dry coating film, based on polyethylene.

4. Pipe screw according to one of the preceding claims, **characterised in that** a corrosion preventive coating (22) is provided between the surface of the pipe screw (10) and the first layer (24).

5. Pipe screw according to one of the preceding claims, **characterised in that** the thickness of the first layer (24) is between 1 µm and 2 µm.

6. Pipe screw according to one of the preceding claims, **characterised in that** the thickness of the second layer (28) is between 0.5 µm and 1.5 µm.

7. A method for manufacturing a pipe screw (10) according to one of the claims 1 to 6, the method comprising the following steps:
a. Manufacturing of a pipe screw (10) having a threaded portion (12) and a collar portion (14);
b. Applying at least sectionwise in the area of the threaded portion (12) and the collar portion (14) a first layer (24), having a friction reducing coating (26); and
c. Applying at least sectionwise in the area of the collar portion (14) a second layer (28), having the friction reducing coating (26).

8. A method according to claim 7, **characterised in that** the surface of the pipe screw (10) is roughened with the surface roughness Ra being between 1.0 µm and 1.5 µm.

9. A method according to claim 8, **characterised in that** to the roughened surface a corrosion preventive coating (22) is applied which is activated by means of a low-pressure plasma method.

10. A method according to one of the claims 7 to 9, **characterised in that** the first layer (24) is applied by means of a dipping or drum method.

11. A method according to claim 10, **characterised in that** the pipe screw (10) is heated after appliance of the first layer (24).

12. A method according to claim 11, **characterised in that** the first layer (24) is thermally post-treated in the area of the threaded portion (12).

13. A method according to one of the claims 7 to 12, **characterised in that** the second layer (28) is applied by means of a tampon printing method.

14. A method according to claim 13, **characterised in that** the pipe screw (10) is air-dried after appliance of the second layer (28).

## Revendications

1. Vis tubulaire pour la fixation d'un conduit tubulaire (30), comprenant une portion à pas de vis (12) et une portion en collerette (14), **caractérisée en ce que** la portion à pas de vis (12) et la portion en collerette (14) sont dotées au moins par tronçons d'une première nappe (24), qui comprend une couche (26) réduisant la friction, et **en ce que** la portion en collerette (14) est pourvue au moins par tronçons d'une seconde nappe (28), qui comprend la couche (26) réduisant la friction.

2. Vis tubulaire selon la revendication 1, **caractérisée en ce que**, dans la zone de la portion à pas de vis (12), la première nappe (24) est traitée de telle façon que le rapport du coefficient de friction de la première nappe (24) dans la portion à pas de vis (12) sur celui de la première et/ou de la seconde nappe (24, 28) dans la portion en collerette (14) s'élève entre 1,5 et 3.

3. Vis tubulaire selon la revendication 1 ou 2, **caractérisée en ce que** la couche (26) réduisant la friction est un film de glissement à sec à base de polyéthylène.

4. Vis tubulaire selon l'une des revendications précédentes, **caractérisée en ce qu'**il est prévu une couche de protection anticorrosion entre la surface de la vis tubulaire (10) et la première nappe (24).

5. Vis tubulaire selon l'une des revendications précédentes, **caractérisée en ce que** l'épaisseur de la première nappe (24) s'élève entre 1 µm et 2 µm.

6. Vis tubulaire selon l'une des revendications précédentes, **caractérisée en ce que** l'épaisseur de la seconde nappe s'élève entre 0,5 µm et 1,5 µm.

7. Procédé pour la production d'une vis tubulaire (10) selon l'une des revendications 1 à 6, qui inclut les étapes de procédé suivantes :
a) on engendre une vis tubulaire (10), qui inclut une portion à pas de vis (12) et une portion en collerette (14) ;
b) on applique au moins par tronçons une première nappe (24), qui comprend une couche (26) réduisant la friction, dans la région de la portion à pas de vis (12) et de la portion en collerette (14) ; et
c) on applique au moins par tronçons une seconde nappe (28), qui comprend la couche (26) réduisant la friction, dans la région de la portion en collerette (14).

8. Procédé selon la revendication 7, **caractérisé en ce que** la surface de la vis tubulaire (10) est rendue rugueuse, de sorte que la rugosité de surface Ra s'élève entre 1,0 µm et 1,5 µm.

9. Procédé selon la revendication 8, **caractérisé en ce qu'**une couche de protection anticorrosion (22) est appliquée sur la surface rugueuse, couche qui est activée par voie chimique au moyen d'un procédé au plasma à basse pression.

10. Procédé selon l'une des revendications 7 à 9, **caractérisé en ce que** la première nappe (24) est appliquée au moyen d'une procédure au plonger ou d'une procédure en tambour.

11. Procédé selon la revendication 10, **caractérisé en ce que** la vis tubulaire (10) est chauffée après l'application de la première nappe (24).

12. Procédé selon la revendication 11, **caractérisé en ce que** la première nappe (24) subit un traitement thermique postérieur dans la région de la portion à pas de vis (12).

13. Procédé selon l'une des revendications 7 à 12, **caractérisé en ce que** la seconde nappe (28) est appliquée au moyen d'un procédé au tampon sous pression.

14. Procédé selon la revendication 13, **caractérisé en ce que** la vis tubulaire (10) est séchée à l'air après l'application de la seconde nappe (28).
